# EUROPÄISCHE PATENTSCHRIFT

(11) **EP 3 013 642 B1**
(45) Veröffentlichungstag und Bekanntmachung des Hinweises auf die Patenterteilung: **06.05.2020**
(21) Anmeldenummer: 14723086.6
(22) Anmeldetag: 12.05.2014
(51) Int. Cl.: B60Q 1/24, B60Q 1/32

(54) **KRAFTFAHRZEUG**
MOTOR VEHICLE
VÉHICULE AUTOMOBILE

(30) Priorität: 24.06.2013 DE 102013211877
(43) Veröffentlichungstag der Anmeldung: 04.05.2016
(73) Patentinhaber: Bayerische Motoren Werke Aktiengesellschaft, 80809 München (DE)
(72) Erfinder: MEINZER, Patric, 80639 Muenchen (DE); WIRTZ, Wolfgang, 81245 Muenchen (DE); KLIMKE, Max, 80798 München (DE); SIELER, Marcel, 81249 München (DE)
(86) Internationale Anmeldenummer: PCT/EP2014/059626
(87) Internationale Veröffentlichungsnummer: WO 2014/206626

(56) Entgegenhaltungen:
- EP-A2- 2 674 328
- WO-A1-2005/035308
- DE-A1- 19 805 771
- DE-A1-102009 024 894
- DE-U1-202005 017 408
- DE-U1-202008 016 695
- DE-U1-202008 016 695
- US-A- 5 497 306
- US-A1- 2012 089 299
- US-A1- 2012 280 528

## Beschreibung

Die Erfindung betrifft ein Kraftfahrzeug mit einer Umfeldbeleuchtungseinrichtung zur Erzeugung einer Lichtverteilung auf dem Boden in der Umgebung des Kraftfahrzeugs.

Aus dem Stand der Technik sind Umfeldbeleuchtungseinrichtungen bekannt, mit denen in der Umgebung um ein Kraftfahrzeug Lichtverteilung und insbesondere Lichtmuster generiert werden können. Eine solche Umfeldbeleuchtungseinrichtung ist beispielsweise in der Druckschrift DE 10 2007 050 830 A1 offenbart. Herkömmliche Umfeldbeleuchtungseinrichtungen weisen den Nachteil auf, dass sie in der Regel einen großen Bauraum im Fahrzeug benötigen.

Es ist ferner bekannt, in den Türaußengriff eines Fahrzeugs eine Umfeldbeleuchtungseinrichtung zu integrieren, welche bei der Entriegelung des Fahrzeugs aktiviert wird. Ebenso gibt es Ausstiegsbeleuchtungen, die in der Unterkante der Türverkleidung eines Kraftfahrzeugs eingebaut sind. Umfeldbeleuchtungen im Türaußengriff und Ausstiegsbeleuchtungen weisen den Nachteil auf, dass sie nur bei geschlossener bzw. bei offener Tür sichtbar sind.

Die Druckschriften DE 20 2008 016 695 U1 und DE 198 05 771 A1 offenbaren jeweils eine Umfeldbeleuchtungseinrichtung für ein Kraftfahrzeug, die vorzugsweise in einem Seitenspiegel integriert ist und einen Bereich neben Zustiegstüren des Kraftfahrzeugs ausleuchtet.

Aufgabe der Erfindung ist es, ein Kraftfahrzeug mit einer Umfeldbeleuchtungseinrichtung zu schaffen, welche wenig Bauraum benötigt und eine gut erkennbare Lichtverteilung am Boden im Umfeld des Kraftfahrzeugs generiert.

Diese Aufgabe wird durch das Kraftfahrzeug gemäß Patentanspruch 1 gelöst. Weiterbildungen der Erfindung sind in abhängigen Ansprüchen definiert.

Das erfindungsgemäße Kraftfahrzeug, welches insbesondere ein PKW ist, umfasst eine Umfeldbeleuchtungseinrichtung zur Erzeugung einer Lichtverteilung auf dem Boden in der Umgebung des Kraftfahrzeugs. Zur Generierung dieser Lichtverteilung umfasst die Umfeldbeleuchtungseinrichtung ein oder mehrere Projektionsmodule, wobei ein jeweiliges Projektionsmodul zumindest eine Lichtquelle und Array aus Projektionsoptiken umfasst. Dieses Array generiert aus dem Licht der zumindest einer Lichtquelle zumindest einen Teil der Lichtverteilung. Umfasst die Umfeldbeleuchtungseinricht ung nur ein Projektionsmodul, ist dieses Modul für die Generierung der gesamten Lichtverteilung verantwortlich. Das erfindungsgemäße Kraftfahrzeug kann ggf. auch mehrere Umfeldbeleuchtungseinrichtungen mit entsprechenden Projektionsmodulen umfassen, wobei in diesem Fall jede Umfeldbeleuchtungseinri chtung eine separate Lichtverteilung generiert.

Erfindungsgemäß ist ein jeweiliges Projektionsmodul derart ausgestaltet, dass jede Projektionsoptik des Arrays aus Projektionsoptiken ein Einzelbild auf den Boden projiziert, das im Wesentlichen die gesamte Lichtverteilung abdeckt, wobei die Lichtverteilung eine Überlagerung der Einzelbilder der Projektionsoptiken ist. Auf diese Weise wird die Generierung der Lichtverteilung (mit verminderter Lichthelligkeit) auch dann sichergestellt, wenn der Lichtaustritt des Projektionsmoduls teilweise verschmutzt ist. Es kommt somit nicht zu einem Verdecken bzw. Abschneiden der Lichtverteilung in bestimmten Bereichen.

Die Erfindung weist den Vorteil auf, dass auf einfache Weise eine scharfe Lichtverteilung über ein Projektionsmodul mit Hilfe eines Arrays aus Projektionsoptiken generiert werden kann. Das Projektionsmodul ist dabei sehr kompakt. Die im erfindungsgemäßen Kraftfahrzeug verwendeten Projektionsmodule weisen vorzugsweise Abmessungen im Zentimeterbereich bzw. von mehreren Millimetern auf. Jede Projektionsoptik in dem Array aus Projektionsoptiken umfasst vorzugsweise zumindest eine Mikrolinse, welche insbesondere einen Durchmesser von 2000 µm oder weniger aufweist. Ferner umfasst ein Array vorzugsweise zwischen 100 und 400 Projektionsoptiken, insbesondere 200 Projektionsoptiken.

In einer besonders bevorzugten Ausführungsform wird als Projektionsmodul ein Projektionsdisplay verwendet, welches in dem Dokument DE 10 2009 024 894 A1 bzw. in dem Dokument DE 10 2011 076 083 A1 beschrieben ist. Als Lichtquelle werden im Projektionsmodul vorzugsweise eine oder mehrere LEDs bzw. ggf. auch eine oder mehrere Laserdioden verwendet.

In einer besonders bevorzugten Ausführungsform sind das oder die Projektionsmodule in einem sich in die Karosserie des Kraftfahrzeugs erstreckenden Lichtschacht angeordnet, wodurch eine direkte Blendung durch die Lichtquelle vermieden wird.

In einer weiteren Ausgestaltung kann die Einbauposition des oder der Projektionsmodule im Kraftfahrzeug justiert werden. Das heißt, es ist ein entsprechendes Justagemittel vorgesehen. Dieses Justagemittel kann je nach Anwendungsfall eine manuelle und/oder automatische Justierung der Einbauposition ermöglichen. Auf diese Weise können Fertigungstoleranzen bei der Integration der Projektionsmoduls im Fahrzeug berücksichtigt werden und die entsprechende Lichtverteilung durch Justierung der Einbauposition der Projektionsmodule immer scharf abgebildet werden.

In einer weiteren, besonders bevorzugten Ausführungsform ist die Lichtverteilung ein Lichtmuster, d.h. eine strukturierte Helligkeitsverteilung, welche ggf. auch farbig ausgestaltet sein kann. Das Lichtmuster umfasst dabei in einer Variante ein Streifenmuster. Vorzugsweise nimmt dabei die Dichte der Streifen in eine vorbestimmte Richtung am Boden mit zunehmendem Abstand des Streifenmusters von der Einbauposition des oder der Projektionsmodule ab. Auf diese Weise können mit der Lichtverteilung ansprechende Effekte generiert werden.

In einer weiteren Ausgestaltung umfasst das Lichtmuster ein Muster aus Punkten und/oder aus graphischen Elementen, wie z.B. Logos. Vorzugsweise nimmt dabei die Dichte der Punkte und/oder graphischen Elemente in eine vorbestimmte Richtung am Boden mit zunehmendem Abstand des Musters von der Einbauposition des oder der Projektionsmodule im Kraftfahrzeug ab. Demgegenüber nimmt der Durchmesser der Punkte und/oder graphischen Elemente in eine vorbestimmte Richtung am Boden mit zunehmendem Abstand des Musters von der Einbauposition des oder der Projektionsmodule vorzugsweise zu.

In einer besonders bevorzugten Ausführungsform können die Punkte des Punktmusters benachbart zu der Einbauposition des bzw. der Projektionsmodule zunächst ein Durchmesser von 3 mm aufweisen, wobei dieser Durchmesser dann kontinuierlich auf 40 mm zunimmt. Ebenso kann der Punkteabstand zunächst nur im Bereich von ca. 4 bis 5 mm liegen und dann kontinuierlich mit größerem Abstand von der Einbauposition auf 40 mm zunehmen.

In einer weiteren Ausgestaltung weitet sich die projizierte Lichtverteilung entlang einer vorbestimmten Richtung am Boden mit zunehmendem Abstand der Lichtverteilung von der Einbauposition des oder der Projektionsmodule im Kraftfahrzeug auf.

Die Aktivierung der Lichtverteilung (d.h. das Anschalten der Lichtquelle(n) des oder der Projektionsmodule) kann an verschiedene Ereignisse gekoppelt sein. Vorzugsweise wird die Lichtverteilung dann generiert, wenn eine Zentralverriegelung im Kraftfahrzeug entriegelt wird bzw. eine Zugangstür im Kraftfahrzeug geöffnet wird. Ggf. kann die Aktivierung der Lichtverteilung auch durch Aufdimmen (d.h. kontinuierliche Helligkeitserhöhung) der zumindest einen Lichteffekte des oder der Projektionsmodule erfolgen, wodurch ansprechende Lichtquellen generiert werden können.

In einer besonders bevorzugten Ausgestaltung des erfindungsgemäßen Kraftfahrzeugs sind das oder die Projektionsmodule derart im Bereich einer Zugangstür des Kraftfahrzeugs angebracht, dass die Lichtverteilung im Öffnungsbereich der Zugangstür generiert wird, wobei die Lichtverteilung vorzugsweise nicht durch das Öffnen der Zugangstür abgeschattet wird. Die Zugangstür ist vorzugsweise eine Personeneinstiegstür. Hierdurch können Lichtinszenierungen beim Entriegeln des Fahrzeugs bzw. beim Ausstieg oder Einstieg von Personen generiert werden. Ferner wird die Sicherheit durch eine gute Ausleuchtung des Bodens vor den Personeneinstiegen erhöht.

In einer weiteren Ausgestaltung sind das oder die Projektionsmodule in einem Türschweller des Kraftfahrzeugs vorgesehen, insbesondere an einer Einbauposition, welche in Längsrichtung des Kraftfahrzeugs vom vorderen zum hinteren Ende vor einer Personeneinstiegstür liegt. Die Lichtverteilung wird dabei insbesondere neben dieser Personeneinstiegstür generiert, indem das oder die Projektionsmodule das Licht in Richtung nach hinten neben die Personeneinstiegstür projizieren.

In einer weiteren, besonders bevorzugten Ausführungsform generieren das oder die Projektionsmodule im Betrieb eine Lichtverteilung, welche sich auf einer Seite des Kraftfahrzeugs im Wesentlichen entlang einer Fahrer- oder Beifahrereinstiegstür und einer dahinter liegenden Einstiegstür für Fond-Passiere erstreckt. Vorzugsweise sind dabei Umfeldbeleuchtungseinrichtungen mit entsprechenden Projektionsmodulen auf beiden Seiten des Kraftfahrzeugs vorgesehen.

Alternativ oder zusätzlich besteht die Möglichkeit, dass in dem Kraftfahrzeug eine Umfeldbeleuchtungseinrichtung verbaut ist, deren Projektionsmodule im Betrieb eine Lichtverteilung unterhalb und/oder in Längsrichtung des Fahrzeugs hinter einer Kofferraumzugangstür generieren. Der Begriff der Kofferraumzugangstür ist dabei weit zu verstehen und kann neben dem Kofferraumdeckel einer Stufenheck-Limousine auch die Heckklappe eines Fahrzeugs mit Fließheck bzw. Steilheck bzw. Schrägheck umfassen.

In einer weiteren Variante des erfindungsgemäßen Kraftfahrzeugs zeigt die Lichtverteilung auf dem Boden das Detektionsfeld eines drahtlosen Sensors an, wobei das Detektionsfeld vorzugsweise ein Bedienfeld ist, so dass bei Einbringen von Körperteilen und/oder Gegenständen in das Bedienfeld eine Bedienaktion im Kraftfahrzeug automatisch ausgelöst wird. In einer bevorzugten Variante ist der drahtlose Sensor dabei derart ausgestaltet, dass bei einer Detektion eines Fusses in dem Detektionsfeld die Kofferraumzugangstür automatisch entriegelt und/oder geöffnet wird.

Ausführungsbeispiele der Erfindung werden nachfolgend anhand der beigefügten Figuren detailliert beschrieben.

Es zeigen:
- Fig. 1: eine Seitenansicht eines erfindungsgemäßen Kraftfahrzeugs mit einer Umfeldbeleuchtungseinrichtung ;
- Fig. 2: eine Draufsicht auf das Kraftfahrzeugs der Fig. 1;
- Fig. 3: eine schematische Detailansicht der in Fig. 1 gezeigten Umfeldbeleuchtungseinrichtung; und
- Fig. 4: eine Ansicht der Umfeldbeleuchtungseinrichtung aus Fig. 3 gesehen in Längsrichtung des Kraftfahrzeugs.

Nachfolgend wird eine Ausführungsform eines erfindungsgemäßen Kraftfahrzeugs mit einer Umfeldbeleuchtungseinrichtung beschrieben, welche im Türschweller des Kraftfahrzeugs integriert ist und zur seitlichen Beleuchtung des Bereichs neben den Personeneinstiegstüren des Kraftfahrzeugs dient.

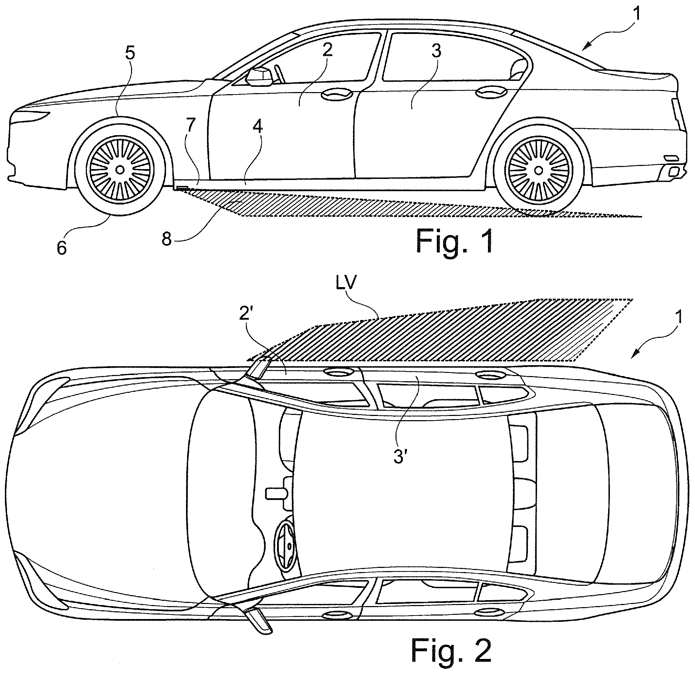

Fig. 1 zeigt eine Seitenansicht des Kraftfahrzeugs in der Form des PKWs 1. Der PKW umfasst auf der dargestellten linken Seite eine Fahrertür 2 sowie eine Fondtür 3. Analog sind auf der gegenüberliegenden Seite des Fahrzeugs (Fig. 2) eine Beifahrertür 2' und eine dahinter liegende Fondtür 3' vorgesehen. In der Ausführungsform der Fig. 1 ist in dem Türschweller 4 unterhalb der Türen 2 und 3 eine Umfeldbeleuchtungseinrichtung 7 vorgesehen. Diese Beleuchtungseinrichtung befindet sich am vorderen Ende des Türschwellers im Bereich des Radkastens 5, der das Rad 6 umgibt. Erfindungsgemäß wird als Umfeldbeleuchtungseinrichtung erstmals ein Projektionsmodul mit einem Array aus Mikrolinsen eingesetzt, um hierdurch gezielt eine vorbestimmte Lichtverteilung neben den Türen 2 und 3 des Kraftfahrzeugs zu generieren.

Als Projektionsmodul kommt dabei das Projektionsdisplay zum Einsatz, das in den bereits oben genannten Druckschriften DE 10 2009 024 894 A1 bzw. DE 10 2011 076 083 A1 beschrieben ist. In diesem Projektionsmodul wird eine Mehrkanaloptik mit einer zweidimensionalen Anordnung von Projektionsoptiken umfassend Mikrolinsen zur Projektion eines Bildes genutzt. In der hier beschriebenen Ausführungsform umfasst das Projektionsmodul eine LED als Lichtquelle. Das Projektionsmodul ist sehr kompakt und weist Abmessungen im Zentimeterbereich auf. In einer Variante liegen die Breite, Höhe und Länge des Projektionsmoduls jeweils bei in etwa 15 mm. Jede Projektionsoptik des Projektionsmoduls erzeugt das gleiche Einzelbild, und das Gesamtbild setzt sich aus der Überlagerung dieser Einzelbilder zusammen. In der hier beschriebenen Ausführungsform ist das Gesamtbild eine entsprechende Lichtverteilung, die auf den Boden in der Umgebung des Kraftfahrzeugs projiziert wird. In Fig. 1 ist die Ausbreitungsrichtung des auf den Boden geworfenen Lichts des Projektionsmoduls 7 mit Bezugszeichen 8 bezeichnet.

Die auf den Boden neben dem Fahrzeug projizierte Lichtverteilung LV ist aus der Draufsicht der Fig. 2 ersichtlich und erzeugt den Effekt eines Lichtteppichs. Dabei ist zu beachten, dass die Lichtverteilung anders als in Fig. 1 rechts neben dem Fahrzeug 1 benachbart zu den Türen 2' und 3' wiedergegeben ist. Dies ist möglich, denn im Kraftfahrzeug sind symmetrisch auf der rechten und linken Seite Projektionsmodule 7 verbaut. Mit anderen Worten werden sowohl auf der linken Seite als auch auf der rechten Seite des Fahrzeugs benachbart zu den Einstiegstüren entsprechend gespiegelte Lichtverteilungen erzeugt. Aus Übersichtlichkeitsgründen ist in Fig. 2 nur die Lichtverteilung benachbart zu den Türen 2' und 3' wiedergegeben. In dem Ausführungsbeispiel der Fig. 2 stellt die Lichtverteilung LV ein Muster aus parallelen Streifen dar, welche schräg zur Längsachse des Fahrzeugs verlaufen. Die Streifen sind dunkel dargestellt und repräsentieren in der tatsächlichen Lichtverteilung helle Balken auf dem Boden neben dem Fahrzeug. Wie aus Fig. 2 ersichtlich wird, weitet sich die Lichtverteilung von der vorderen Tür 2' hin zum Bereich hinter der Tür 3' auf. Man erkennt ferner, dass das Streifmuster der Lichtverteilung im hinteren Bereich verschwimmt, wobei dieser Effekt durch eine abnehmende Helligkeit der Streifen generiert wird.

Das dargestellte Streifenmuster ist lediglich beispielhaft für eine generierte Lichtverteilung, und es können beliebige andere Muster erzeugt werden. Insbesondere kann durch die Lichtverteilung gegebenenfalls auch ein Punktmuster wiedergegeben werden. Darüber hinaus können die Streifen des Streifenmusters auch in eine andere Richtung, z.B. parallel zur Fahrzeuglängsachse oder senkrecht zu dieser verlaufen.

Mit dem im Fahrzeug verbauten Projektionsmodul 7 können über das Mikrolinsenarray beliebige scharfe Projektionen von Lichtmustern bei gleichzeitig sehr geringem Bauraum für das Projektionsmodul generiert werden. In der Ausführungsform der Fig. 2 kann die Lichtverteilung dabei als sog. "Welcome-Element" genutzt werden, bei dem die Lichtprojektion am Boden vor dem Fahrzeug bei Annäherung des Fahrers bzw. eines Fahrpassagiers an das Fahrzeug erzeugt wird. Ggf. kann die Lichtverteilung z.B. auch nur im Bereich der Fondtür 3 bzw. 3' generiert werden. In diesem Fall kann das Projektionsmodul an der vorderen Kante der Fondtür angeordnet sein. Dabei kann in einer Chauffeurslimousine über die Lichtverteilung ein Ausstieg der chauffierten Person im Fond durch Anschalten der Lichtverteilung beim Öffnen der Fondtür inszeniert werden. Allgemein wird durch ein geeignetes Lichtmuster im Bereich der Personenausstiege des Fahrzeugs erreicht, dass der Untergrund neben dem Fahrzeug besser sichtbar ist und somit z.B. Bordsteinkanten bzw. Kanaldecken durch eine einsteigende bzw. aussteigende Person besser erkannt werden können, wodurch die Sicherheit erhöht wird. Darüber hinaus wird durch die Anordnung des Projektionsmoduls im Türschweller 4 sichergestellt, dass es beim Öffnen der Türen nicht zur einer Abschattung der Lichtverteilung kommt, d.h. die Lichtverteilung ist unabhängig von der Position der Türen immer am Boden des Fahrzeugs sichtbar.

Durch die Verwendung eines Projektionsmoduls mit einem Mikrolinsenarray, welches vorzugsweise ca. 200 Mikrolinsen aufweist, kann das entsprechende Lichtmuster über die gesamte Länge scharf auf den Boden projiziert werden. Jede Linse projiziert dabei die Struktur des gesamten Lichtmusters. Dies hat den Vorteil, dass bei einer Verschmutzung bzw. Verdeckung der Lichtaustrittsfläche des Projektionsmoduls immer noch das gesamte Lichtmuster sichtbar bleibt und nur dessen Helligkeit vermindert ist.

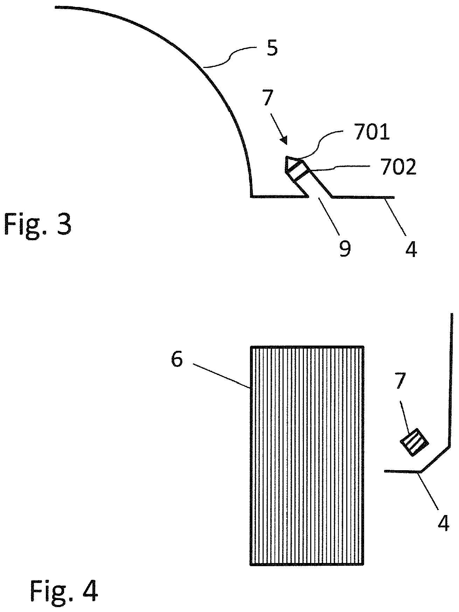

Fig. 3 zeigt im Schnitt eine Detailansicht des Projektionsmoduls aus Fig. 1. Das Modul 7, das benachbart zum Radkasten 5 im Türschweller 4 integriert ist, umfasst eine schematisch angedeutete Lichtquelle 701, welche als LED ausgestaltet ist. An die Lichtquelle schließt sich die mehrkanalige Projektionsoptik in der Form eines Mikrolinsenarrays 702 an. Das Array ist wiederum nur schematisch angedeutet. Gemäß Fig. 3 ist das Projektionsmodul in einem schräg nach hinten verlaufenden Lichtschacht 9 angeordnet, so dass sichergestellt wird, dass die Lichtquelle nicht direkt eingesehen werden kann, wodurch gesetzlichen Anforderungen Rechnung getragen wird.

Fig. 4 zeigt nochmals im Schnitt eine Ansicht auf das Projektionsmodul aus Fig. 3 gesehen in Längsrichtung des Fahrzeugs von vorne nach hinten. Man erkennt in Fig. 4 neben dem Modul 7 das vordere Rad 6 des Fahrzeugs sowie den Türschweller 4. Der Türschweller verläuft dabei in einem Teilabschnitt in einem Winkel von etwa 45° schräg zum Boden. Gegenüber diesem Teilabschnitt befindet sich das lediglich schematisch angedeutete Projektionsmodul 7, wobei aus Übersichtlichkeitsgründen der Lichtschacht nicht wiedergegeben ist. Das Projektionsmodul 7 wird über eine Halteeinrichtung am Türschweller gehalten, wobei der Lichtschacht 9 Teil der Halteeinrichtung ist. Die Halteeinrichtung selbst ist nicht im Detail wiedergegeben. Die Halteeinrichtung kann dabei aus dem Schweller ausgebaut werden, so dass das Projektionsmodul bei einem Defekt durch ein neues ersetzt werden kann. Um Fertigungstoleranzen auszugleichen, ist vorzugsweise eine Justiereinrichtung vorgesehen, mit der die Position des Projektionsmoduls relativ zu dem Lichtschacht in vorbestimmten Grenzen manuell und ggf. auch automatisch über entsprechende Aktuatoren eingestellt werden kann. Hierdurch kann erreicht werden, dass die Lichtverteilung am Boden immer scharf abgebildet wird.

Die im Vorangegangenen beschriebenen Ausführungsformen der Erfindung weisen eine Reihe von Vorteilen auf. Insbesondere kann durch Verwendung eines Projektionsmoduls mit einem Mikrolinsenarray eine gut sichtbare Lichtverteilung in der Form eines Lichtteppichs am Boden in der Umgebung eines Kraftfahrzeugs generiert werden. Dabei können unterschiedlichste Muster erzeugt werden, welche sowohl bei offenen als auch geschlossenen Fahrzeugtüren sichtbar sind. Hierdurch können verschiedene Lichtinszenierungen bei der Annäherung bzw. beim Ein- oder Ausstieg aus dem Fahrzeug generiert werden. Darüber hinaus dient der Lichtteppich auch als Funktionsbeleuchtung, da er eine bessere Erkennbarkeit des Bodenreliefs gewährleistet. Besonders gut wird das Bodenrelief bei der Verwendung eines Streifenmusters erkennbar. Der Lichtteppich erzeugt nur einen Lichtaustritt im unteren Sichtfeld des Fahrzeugs und strahlt in der beschriebenen Ausführungsform in Fahrtrichtung nach hinten weg. Dabei können z.B. durch Aufdimmen weitere Effekte generiert werden. Insbesondere können sich Lichtmuster langsam nach hinten ausbreiten (Kriech-Effekt, dynamische Inszenierung). Durch die Verwendung eines kompakten Projektionsmoduls wird darüber hinaus wenig Bauraum benötigt, und auch bei einer Verschmutzung bzw. teilweisen Verdeckung der Lichtquelle des Projektionsmoduls bleibt der generierte Lichtteppich sichtbar.

### Bezugszeichenliste

- 1: Kraftfahrzeug
- 2, 2', 3, 3': Fahrzeugtüren
- 4: Türschweller
- 5: Radkasten
- 6: Rad
- 7: Projektionsmodul
- 8: Lichtausbreitung
- LV: Lichtverteilung
- 701: Lichtquelle
- 702: Array aus Projektionsoptiken
- 9: Lichtschacht

## Patentansprüche

1. Kraftfahrzeug, umfassend eine Umfeldbeleuchtungseinrichtung zur Erzeugung einer Lichtverteilung (LV) auf dem Boden in der Umgebung des Kraftfahrzeugs (1), wobei die Umfeldbeleuchtungseinrichtung ein oder mehrere Projektionsmodule (7) zur Erzeugung der Lichtverteilung (LV) aufweist, wobei ein jeweiliges Projektionsmodul (7) zumindest eine Lichtquelle (701) und ein Array (702) aus Projektionsoptiken umfasst, welches aus dem Licht der zumindest einen Lichtquelle (701) zumindest einen Teil der Lichtverteilung (LV) generiert, **dadurch gekennzeichnet dass**
ein jeweiliges Projektionsmodul (7) derart ausgestaltet ist, dass jede Projektionsoptik ein Einzelbild auf den Boden projiziert, das im Wesentlichen die gesamte Lichtverteilung abdeckt, und die Lichtverteilung (LV) eine Überlagerung der Einzelbilder der Projektionsoptiken ist.

2. Kraftfahrzeug nach Anspruch 1, **dadurch gekennzeichnet, dass** das jede Projektionsoptik zumindest eine Mikrolinse, insbesondere mit einem Durchmesser von 2000 Mikrometer oder weniger, umfasst.

3. Kraftfahrzeug nach Anspruch 1 oder 2, **dadurch gekennzeichnet**, das das Array (702) zwischen 100 und 400 Projektionsoptiken, insbesondere 200 Projektionsoptiken, umfasst.

4. Kraftfahrzeug nach einem der vorhergehenden Ansprüche, **dadurch gekennzeichnet, dass** die zumindest eine Lichtquelle (701) eine oder mehrere LEDs und/oder Laserdioden umfasst.

5. Kraftfahrzeug nach einem der vorhergehenden Ansprüche, **dadurch gekennzeichnet, dass** das oder die Projektionsmodule (7) in einem sich in die Karosserie des Kraftfahrzeugs (1) erstreckenden Lichtschachts (9) angeordnet sind.

6. Kraftfahrzeug nach einem der vorhergehenden Ansprüche, **dadurch gekennzeichnet, dass** ein Justagemittel vorgesehen ist, so dass die Einbauposition des oder der Projektionsmodule (7) im Kraftfahrzeug (1) justiert werden kann.

7. Kraftfahrzeug nach einem der vorhergehenden Ansprüche, **dadurch gekennzeichnet, dass** die Lichtverteilung (LV) ein Lichtmuster ist.

8. Kraftfahrzeug nach Anspruch 7, **dadurch gekennzeichnet, dass** das Lichtmuster (LV) ein Streifenmuster umfasst, wobei vorzugsweise die Dichte der Streifen in eine vorbestimmte Richtung am Boden mit zunehmendem Abstand des Streifenmusters von der Einbauposition des oder der Projektionsmodule (7) im Kraftfahrzeug (1) abnimmt.

9. Kraftfahrzeug nach Anspruch 7 oder 8, **dadurch gekennzeichnet, dass** das Lichtmuster (LV) ein Muster aus Punkten und/oder aus graphischen Elementen umfasst, wobei vorzugsweise die Dichte der Punkte und/oder graphischen Elemente in eine vorbestimmte Richtung am Boden mit zunehmendem Abstand des Musters von der Einbauposition des oder der Projektionsmodule (7) im Kraftfahrzeug (1) abnimmt und/oder der Durchmesser der Punkte und/oder graphischen Elemente in eine vorbestimmte Richtung am Boden mit zunehmendem Abstand des Musters von der Einbauposition des oder der Projektionsmodule (7) zunimmt.

10. Kraftfahrzeug nach einem der Ansprüche 7 bis 9, **dadurch gekennzeichnet, dass** das Lichtmuster (LV) an einem entfernten Ende von der Einbauposition des oder der Projektionsmodule (7) im Kraftfahrzeug (1) unscharf wird und/oder in seiner Helligkeit abnimmt.

11. Kraftfahrzeug nach einem der vorhergehende Ansprüche, **dadurch gekennzeichnet, dass** sich die Lichtverteilung (LV) entlang einer vorbestimmten Richtung am Boden mit zunehmendem Abstand der Lichtverteilung (LV) von der Einbauposition des oder der Projektionsmodule im Kraftfahrzeug (1) aufweitet.

12. Kraftfahrzeug nach einem der vorhergehenden Ansprüche, **dadurch gekennzeichnet, dass** die Aktivierung der Lichtverteilung (LV) an ein Entriegeln einer Zentralverriegelung und/oder an ein Öffnen einer Zugangstür des Kraftfahrzeugs (1) gekoppelt ist und/oder dass die Aktivierung der Lichtverteilung durch ein Aufdimmen der zumindest einen Lichtquelle (701) des oder der Projektionsmodule (7) erfolgt.

13. Kraftfahrzeug nach einem der vorhergehenden Ansprüche, **dadurch gekennzeichnet, dass** das oder die Projektionsmodule (7) derart im Bereich einer Zugangstür (2, 2', 3, 3') des Kraftfahrzeugs (1) angebracht sind, dass die Lichtverteilung (LV) im Öffnungsbereich der Zugangstür (2) generiert wird, wobei die Lichtverteilung (LV) vorzugsweise nicht durch das Öffnen der Zugangstür (2, 2', 3, 3') abgeschattet wird.

14. Kraftfahrzeug nach Anspruch 13, **dadurch gekennzeichnet, dass** die Zugangstür (2, 2', 3, 3') eine Personeneinstiegstür ist.

15. Kraftfahrzeug nach einem der vorhergehenden Ansprüche, **dadurch gekennzeichnet, dass** das oder die Projektionsmodule (7) in einem Türschweller (4) des Kraftfahrzeugs (1) vorgesehen sind, insbesondere an einer Einbauposition, welche in Längsrichtung des Kraftfahrzeugs vor einer Personeneinstiegstür (2, 2', 3, 3') liegt.

16. Kraftfahrzeug nach einem der vorhergehenden Ansprüche, **dadurch gekennzeichnet, dass** das oder die Projektionsmodule (7) im Betrieb eine Lichtverteilung (LV) erzeugen, welche sich auf einer Seite des Kraftfahrzeugs (1) im Wesentlichen entlang einer Fahrer- oder Beifahrereinstiegstür und einer dahinter liegenden Einstiegstür für Fond-Passagiere erstreckt.

17. Kraftfahrzeug nach einem der vorhergehenden Ansprüche, **dadurch gekennzeichnet, dass** das oder die Projektionsmodule (7) im Betrieb eine Lichtverteilung (LV) unterhalb und/oder in Längsrichtung des Fahrzeugs hinter einer Kofferraumzugangstür erzeugen.

18. Kraftfahrzeug nach einem der vorhergehenden Ansprüche, **dadurch gekennzeichnet, dass** die Lichtverteilung (LV) auf dem Boden das Detektionsfeld eines drahtlosen Sensors anzeigt, wobei das Detektionsfeld vorzugsweise ein Bedienfeld ist, so dass bei Einbringen von Körperteilen und/oder Gegenständen in das Bedienfeld eine Bedienaktion am Kraftfahrzeug (1) automatisch ausgelöst wird.

19. Kraftfahrzeug nach Anspruch 17 und 18, **dadurch gekennzeichnet, dass** der drahtlose Sensor derart ausgestaltet ist, dass bei der Detektion eines Fußes in seinem Detektionsfeld die Kofferraumzugangstür automatisch entriegelt und/oder geöffnet wird.

## Claims

1. A motor vehicle, comprising an approach lighting means for generating a light distribution (LV) on the ground in the vicinity of the motor vehicle (1), wherein the approach lighting means has one or more projection modules (7) for generating the light distribution (LV), wherein a respective projection module (7) comprises at least one light source (701) and one array (702) comprising projection optical systems, which from the light of the at least one light source (701) generates at least a part of the light distribution (LV), **characterised in that** a respective projection module (7) is configured such that each projection optical system projects an individual image onto the ground which covers substantially the entire light distribution, and the light distribution (LV) is a superposition of the individual images of the projection optical systems.

2. A motor vehicle according to Claim 1, **characterised in that** the each projection optical system comprises at least one microlens, especially with a diameter of 2000 micrometres or less.

3. A motor vehicle according to Claim 1 or Claim 2, **characterised in that** the array (702) comprises between 100 and 400 projection optical systems, especially 200 projection optical systems.

4. A motor vehicle according to one of the preceding claims, **characterised in that** the at least one light source (701) comprises one or more LEDs and/or laser diodes.

5. A motor vehicle according to one of the preceding claims, **characterised in that** the projection module or modules (7) are arranged in a light well (9) extending into the body of the motor vehicle (1).

6. A motor vehicle according to one of the preceding claims, **characterised in that** an adjustment means is provided, so that the installation position of the projection module or modules (7) in the motor vehicle (1) can be adjusted.

7. A motor vehicle according to one of the preceding claims, **characterised in that** the light distribution (LV) is a light pattern.

8. A motor vehicle according to Claim 7, **characterised in that** the light pattern (LV) comprises a stripe pattern, with preferably the density of the stripes decreasing in a predetermined direction on the ground with increasing distance of the stripe pattern from the installation position of the projection module or modules (7) in the motor vehicle (1).

9. A motor vehicle according to Claim 7 or Claim 8, **characterised in that** the light pattern (LV) comprises a pattern of dots and/or of graphic elements, with preferably the density of the dots and/or graphic elements decreasing in a predetermined direction on the ground with increasing distance of the pattern from the installation position of the projection module or modules (7) in the motor vehicle (1), and/or the diameter of the dots and/or graphic elements increasing in a predetermined direction on the ground with increasing distance of the pattern from the installation position of the projection module or modules (7).

10. A motor vehicle according to one of Claims 7 to 9, **characterised in that** the light pattern (LV) at a remote end from the installation position of the projection module or modules (7) in the motor vehicle (1) becomes blurred and/or decreases in brightness.

11. A motor vehicle according to one of the preceding claims, **characterised in that** the light distribution (LV) widens along a predetermined direction on the ground with increasing distance of the light distribution (LV) from the installation position of the projection module or modules in the motor vehicle (1).

12. A motor vehicle according to one of the preceding claims, **characterised in that** the activation of the light distribution (LV) is coupled to an unlocking of a central locking system and/or to an opening of an access door of the motor vehicle (1), and/or **in that** the activation of the light distribution takes place by dimming-up of the at least one light source (701) of the projection module or modules (7).

13. A motor vehicle according to one of the preceding claims, **characterised in that** the projection module or modules (7) is or are attached in the region of an access door (2, 2', 3, 3') of the motor vehicle (1) in such a way that the light distribution (LV) is generated in the opening region of the access door (2), with the light distribution (LV) preferably not being shaded by the opening of the access door (2, 2', 3, 3').

14. A motor vehicle according to Claim 13, **characterised in that** the access door (2, 2', 3, 3') is an entry door for people.

15. A motor vehicle according to one of the preceding claims, **characterised in that** the projection module or modules (7) are provided in a door sill (4) of the motor vehicle (1), especially at an installation position which in the longitudinal direction of the motor vehicle lies in front of an entry door for people (2, 2', 3, 3').

16. A motor vehicle according to one of the preceding claims, **characterised in that** the projection module or modules (7) in operation generate a light distribution (LV) which extends on one side of the motor vehicle (1) substantially along a driver or passenger entry door and an entry door located behind it for rear passengers.

17. A motor vehicle according to one of the preceding claims, **characterised in that** the projection module or modules (7) in operation generate a light distribution (LV) below and/or in the longitudinal direction of the vehicle behind a boot access door.

18. A motor vehicle according to one of the preceding claims, **characterised in that** the light distribution (LV) on the ground indicates the detection field of a wireless sensor, the detection field preferably being an operating field, so that when body parts and/or objects are introduced into the operating field an operating action on the motor vehicle (1) is automatically triggered.

19. A motor vehicle according to Claim 17 and 18, **characterised in that** the wireless sensor is configured such that when a foot is detected in its detection field the boot access door is automatically unlocked and/or opened.

## Revendications

1. Véhicule comportant un dispositif d'éclairage de l'environnement permettant de produire une distribution de lumière (LV) sur le sol dans l'environnement du véhicule (1), dans lequel :
le dispositif d'éclairage de l'environnement comprend un ou plusieurs module(s) de projection (7) permettant de produire la distribution de lumière (LV), chaque module de projection (7) comprenant au moins une source de lumière (701) et un réseau (702) d'optiques de projection qui génère, à partir de la lumière de la ou des source(s) de lumière (701) au moins une partie de la distribution de lumière (LV),
**caractérisé en ce que**
chaque module de projection (7) est réalisé de sorte que chaque optique de projection projette sur le sol une image individuelle qui recouvre essentiellement la totalité de la distribution de lumière, et la distribution de lumière (LV) est une superposition des images individuelles des optiques de projection.

2. Véhicule automobile conforme à la revendication 1,
**caractérisé en ce que**
chaque optique de projection comporte au moins une microlentille, ayant en particulier, un diamètre de 2000 micromètres ou moins.

3. Véhicule automobile conforme à la revendication 1 ou 2,
**caractérisé en ce que**
le réseau (702) comprend entre 100 et 400 optiques de projection, en particulier 200 optiques de projection.

4. Véhicule automobile conforme à l'une des revendications précédentes,
**caractérisé en ce que**
la ou les source(s) de lumière (701) comporte(nt) une ou plusieurs LED et/ou diode(s) laser.

5. Véhicule automobile conforme à l'une des revendications précédentes,
**caractérisé en ce que**
le ou les module(s) de projection (7) est(sont) installé(s) dans un puits de lumière (9) situé dans la carrosserie du véhicule (1).

6. Véhicule automobile conforme à l'une des revendications précédentes,
**caractérisé en ce qu'**
il est prévu un moyen d'ajustement de sorte que la position de montage du ou des module(s) de projection (7) dans le véhicule (1) puisse être ajustée.

7. Véhicule automobile conforme à l'une des revendications précédentes,
**caractérisé en ce que**
la distribution de lumière (LV) est un motif lumineux.

8. Véhicule automobile conforme à la revendication 7,
**caractérisé en ce que**
le motif lumineux (LV) est un motif de bandes, et de préférence, l'épaisseur des bandes sur le sol dans une direction prédéfinie diminue lorsque la distance du motif de bandes de la position de montage du ou des module(s) de projection (7) dans le véhicule (1) augmente.

9. Véhicule automobile conforme à la revendication 7 ou 8,
**caractérisé en ce que**
le motif lumineux (LV) est un motif de points et/ou d'éléments graphiques et de préférence l'épaisseur des points et/ou des éléments graphiques sur le sol dans une direction prédéterminée diminue lorsque la distance du motif de la position de montage du ou des modèle(s) de projection (7) dans le véhicule (1) augmente et/ou le diamètre des points et/ou des éléments graphiques sur le sol dans une direction prédéfinie augmente lorsque la distance du motif de la position de montage du ou des modèle(s) de projection (7) augmente.

10. Véhicule automobile conforme à l'une des revendications 7 à 9,
**caractérisé en ce que**
le motif lumineux (LV) est flou et/ou a une luminosité qui diminue à l'extrémité éloignée de la position de montage du ou des module(s) de projection (7) dans le véhicule (1).

11. Véhicule automobile conforme à l'une des revendications précédentes,
**caractérisé en ce que**
la distribution de lumière (LV) s'élargit sur le sol le long d'une direction prédéfinie lorsque la distance de la distribution de lumière (LV) de la position de montage du ou des module(s) de projection dans le véhicule (1) augmente.

12. Véhicule automobile conforme à l'une des revendications précédentes,
**caractérisé en ce que**
l'activation de la distribution de lumière (LV) est couplée à un déverrouillage d'un verrouillage central et/ou à une ouverture d'une porte d'accès du véhicule (1) et/ou l'activation de la distribution de lumière est effectuée par une gradation de la ou des source(s) de lumière (701) du ou des module(s) de projection (7).

13. Véhicule automobile conforme à l'une des revendications précédentes,
**caractérisé en ce que**
le ou les module(s) de projection (7) est(sont) installé(s) dans la zone d'une porte d'accès (2, 2', 3, 3') du véhicule (1) de sorte que la distribution de lumière (LV) soit générée dans la zone d'ouverture de la porte d'accès (2), la distribution de lumière (LV) n'étant, de préférence, pas coupée par l'ouverture de la porte d'accès (2, 2', 3, 3').

14. Véhicule automobile conforme à la revendication 13,
**caractérisé en ce que**
la porte d'accès (2, 2', 3, 3') est une porte permettant à des personnes de monter dans le véhicule.

15. Véhicule automobile conforme à l'une des revendications précédentes,
**caractérisé en ce que**
le ou les module(s) de projection (7) est(sont) situé(s) sur un seuil de porte (4) du véhicule (1), en particulier, dans une position de montage qui est située dans la direction longitudinale du véhicule à l'avant d'une porte permettant à des personnes de monter dans celui-ci (2, 2', 3, 3').

16. Véhicule automobile conforme à l'une des revendications précédentes,
**caractérisé en ce que**
le ou les module(s) de projection (7) génère(nt) en fonctionnement une distribution de lumière (LV) qui s'étend sur un côté du véhicule (1) essentiellement le long de la porte d'accès du conducteur ou de son accompagnateur et d'une porte d'accès située à l'arrière pour des passagers arrière.

17. Véhicule automobile conforme à l'une des revendications précédentes,
**caractérisé en ce que**
le ou les module(s) de projection (7) produit(sent) en fonctionnement une distribution de lumière (LV) en dessous et/ou dans la direction longitudinale du véhicule à l'arrière de la porte d'accès au coffre.

18. Véhicule automobile conforme à l'une des revendications précédentes,
**caractérisé en ce que**
la répartition de lumière (LV) affiche sur le sol le champ de détection d'un détecteur sans fil, le champ de détection étant de préférence un champ de commande de sorte que, lors de l'introduction de parties d'un corps et/ou d'objets dans le champ de commande, une action de commande soit automatiquement déclenchée sur le véhicule (1).

19. Véhicule automobile conforme aux revendications 17 et 18,
**caractérisé en ce que**
le détecteur sans fil est réalisé de sorte que, lors de la détection d'un pied dans son champ de détection la porte d'accès au coffre soit automatiquement déverrouillée et/ou ouverte.
